# EUROPÄISCHE PATENTANMELDUNG

(11) **EP 4 803 233 A1**
(43) Veröffentlichungstag der Anmeldung: **09.09.2026**
(21) Anmeldenummer: 26157821.5
(22) Anmeldetag: 11.02.2026
(51) Int. Cl.: B23D 53/06, B23D 59/00, B28D 1/08, B28D 7/02

(54) **WERKZEUGMASCHINE**

(30) Priorität: 07.03.2025 DE 102025108715
(71) Anmelder: LISSMAC Maschinenbau GmbH, 88410 Bad Wurzach (DE)
(72) Erfinder: Hildebrand, Rainer, 88339 Bad Waldsee (DE); Rist, Stephan, 88410 Bad Wurzach (DE); Schöllhorn, Christian, 88319 Aitrach (DE)
(74) Vertreter: RavensPAT Patentanwälte Partnerschaft mbB

(57) **Zusammenfassung**

Es wird eine Werkzeugmaschine (1) mit einem Werkzeugmaschinengehäuse (2) und einem Antriebsmotor (7) für ein Sägewerkzeug (6) der Werkzeugmaschine (1) vorgeschlagen, wobei in einem Arbeitsbetrieb der Werkzeugmaschine (1) zum trennenden Bearbeiten eines Werkstücks (W) das Sägewerkzeug (6) mit dem Antriebsmotor (7) in einer Umlaufrichtung des Sägewerkzeugs (6) umlaufend antreibbar ist, wobei die Werkzeugmaschine (1) eine Auflage (11) mit einer oberen Auflageseite (11a) und einem Durchlass (13) für das Sägewerkzeug (6) aufweist, so dass das Sägewerkzeug (6) durch den Durchlass (13) der Auflage (11) in eine Unterdruckkammer (14) der Werkzeugmaschine (1) durchtritt und aus der Unterdruckkammer (14) über eine Auslassöffnung (15) wieder austritt, wobei die Werkzeugmaschine (1) eine Saugöffnung (16) zum Anschluss einer Unterdruckeinrichtung an der Werkzeugmaschine (1) aufweist, so dass im Arbeitsbetrieb anfallende Werkstoffpartikel über die Saugöffnung (16) aus der Unterdruckkammer (14) abführbar sind, und wobei eine bewegbare Türe (20) zum Verschließen der Unterdruckkammer (14) vorhanden ist. Erfindungsgemäß weist die Türe (20) eine Dichtung zum Abdichten der Unterdruckkammer (14) nach außen bei verschlossener Türe (20) auf, wobei eine Düsenanordnung (17) mit einen ersten Verengungsabschnitt (18) im Nahbereich des Durchlasses (13) der Auflage (11) und/oder mit einem zweiten Verengungsabschnitt (19) im Nahbereich der Auslassöffnung (15) vorgesehen ist, so dass mit einem Verengungsabschnitt (18, 19) bei angeschlossener Unterdruckeinrichtung eine gerichtete Gasströmung (G) in die Unterdruckkammer (14) der Werkzeugmaschine (1) hinein bereitstellbar ist, wobei Gas aus der Umgebung der Werkzeugmaschine (1) durch einen Verengungsabschnitt (18, 19) strömt, so dass Werkstoffpartikel, die durch die trennende Bearbeitung des Werkstücks (W) durch das Sägewerkzeug (6) entstehen, mit der erzeugten Gasströmung (G) in die Unterdruckkammer (14) überführbar sind und wobei im unteren Bereich der Unterdruckkammer (14) ein vertieft ausgebildetes Auffangvolumen (23) für Werkstoffpartikel derart ausgebildet ist, dass die im Gasstrom (G) mitgeführten Werkstoffpartikel sich im Auffangvolumen (23) ansammeln und Werkstoffpartikel aus dem Auffangvolumen (23) aus der Unterdruckkammer (14) über die Saugöffnung (16) der Werkzeugmaschine (1) absaugbar sind.

## Beschreibung

### Stand der Technik

Es sind Werkzeugmaschinen mit einem Werkzeugmaschinengehäuse und einem Antriebsmotor für den Antrieb eines Sägewerkzeuges der Werkzeugmaschine bekannt, die zum Beispiel zur trennenden Bearbeitung von zu sägenden Materialien wie zum Beispiel Lochziegel oder Mauersteine aus Porenbeton oder Porenstein zum Einsatz kommen. Die Hohlräume der Lochziegel können zudem mit einem Dämmstoff ausgefüllt sein.

Im Arbeitsbetrieb muss die Werkzeugmaschine verschiedenen Anforderungen gerecht werden, zum Beispiel technische Anforderungen zum Schutz einer die Werkzeugmaschine bedienenden Person, insbesondere hinsichtlich erschwerter Bedingungen, die sich durch im Trockenbetrieb der Werkzeugmaschine ergeben können.

### Aufgabe und Vorteile der Erfindung

Aufgabe der vorliegenden Erfindung ist es, eine eingangs benannte Werkzeugmaschine zu verbessern, insbesondere im Hinblick auf eine verminderte Verschmutzung im Nahbereich der Werkzeugmaschine durch Werkstoffpartikel bezüglich eines erhöhten Arbeitskomfort für eine Bedienperson der Werkzeugmaschine im Zusammenhang mit einem Trockenbetrieb der Werkzeugmaschine.

Diese Aufgabe wird durch den Gegenstand des Patentanspruchs 1 gelöst. Die abhängigen Patentansprüche richten sich auf vorteilhafte und zweckmäßige Varianten der Erfindung.

Die Erfindung geht aus von einer Werkzeugmaschine mit einem Werkzeugmaschinengehäuse und einem Antriebsmotor für ein Sägewerkzeug der Werkzeugmaschine, wobei in einem Arbeitsbetrieb der Werkzeugmaschine zum trennenden Bearbeiten eines Werkstücks das Sägewerkzeug mit dem Antriebsmotor in einer Umlaufrichtung des Sägewerkzeugs umlaufend antreibbar ist, wobei die Werkzeugmaschine eine Auflage mit einer oberen Auflageseite aufweist, die zum Auflegen des zu bearbeitenden Werkstücks im Arbeitsbetrieb dient, wobei die Auflage einen Durchlass für das Sägewerkzeug aufweist, so dass das Sägewerkzeug durch den Durchlass der Auflage in eine Unterdruckkammer der Werkzeugmaschine durchtritt und aus der Unterdruckkammer über eine Auslassöffnung wieder austritt, wobei die Werkzeugmaschine eine Saugöffnung zum Anschluss einer Unterdruckeinrichtung an der Werkzeugmaschine aufweist, so dass im Arbeitsbetrieb anfallende Werkstoffpartikel über die Saugöffnung aus der Unterdruckkammer abführbar sind, und wobei eine bewegbare Türe vorhanden ist, mit welcher die Unterdruckkammer auf einer Seite von außen verschließbar ist und in einer geöffneten Stellung der Türe zeitweise zugänglich ist. Die Unterdruckkammer ist insbesondere im Arbeitsbetrieb mit der Türe verschließbar. Zum Beispiel ist mit der Türe die Unterdruckkammer auf einer Seite von außen verschließbar. Beispielsweise wird das Sägewerkzeug in einer Umlaufrichtung angetrieben und tritt in Umlaufrichtung von oberhalb der Auflage in die Unterdruckkammer ein. Nach einer Umlenkung des Sägewerkzeugs in der Unterdruckkammer, z. B. durch umfängliches Herumführen außen um 180 Winkelgrad an eine unteren Laufrolle in der Unterdruckkammer, tritt das Sägewerkzeug in Umlaufrichtung aus der Unterdruckkammer über die Auslassöffnung wieder aus. Zum Beispiel läuft dann das Sägewerkzeug oberhalb der Auslassöffnung in vertikaler Richtung weiter bis in einen oberen Laufrollenkasten. Dort wird das Sägewerkzeug wieder um 180 Winkelgrad über z. B. eine obere Laufrolle umgelenkt nach unten in Richtung der Auflageseite der Auflage.

Zum Beispiel ist über die Saugöffnung der Werkzeugmaschine eine Unterdruckeinrichtung an der Werkzeugmaschine anschließbar ist. Zum Beispiel erzeugt die Unterdruckeinrichtung, z. B. mit einer Unterdruck- bzw. Gas-Saugpumpe einen gerichteten Gasstrom aus der Unterdruckammer nach außen, wobei über einen Gasstrom Gas aus der Unterdruckkammer nach außen absaugbar ist. Die Absaugung führt den Gasstrom zum Beispiel in einen Abscheidebehälter für Werkstoffpartikel zum Abscheiden der Werkstoffpartikel aus dem Luftstrom. Zum Beispiel ist mit der angeschlossenen Unterdruckeinrichtung in der Unterdruckkammer ein Unterdruck relativ zum Umgebungsdruck z. B. dem umgebenden Luftdruck einrichtbar. Zum Beispiel ist die Unterdruckkammer ein unterer Laufrollenkasten der Werkzeugmaschine, der von einem Gehäuse umgeben ist.

Zum Beispiel wird erstens ein Ansaugen von Werkstoffpartikel vom Bereich der Auflage ins Innere der Unterdruckkammer erreicht. Dies ist vorteilhaft für das Arbeiten an der Werkzeugmaschine und insbesondere, um ein Verschmutzen der Umgebung der Werkzeugmaschine durch umherfliegenden bzw. aufgewirbelte und außen sich auf Oberflächen abgelagerte Werkstoffpartikel zu vermeiden.

Zweitens wird ein gerichtetes Absaugen, z. B. ein kontinuierliches Absaugen, aus der Werkzeugmaschine bzw. der ins Innere der Unterdruckkammer angesaugten Werkstoffpartikel aus den Unterdruckkammer nach außen über die Saugöffnung erreicht. Zum Beispiel sind die abgesaugten Werkstoffpartikel von der Saugöffnung gezielt in z. B. einen Sammelbehälter bzw. den Abscheidebehälter überführbar. Die betreffenden Vorgänge erfolgen z. B. kontinuierlich.

Beispielsweise ist die Unterdruckeinrichtung eine externe Einheit. Beispielsweise ist die Unterdruckeinrichtung nicht Teil der Werkzeugmaschine.

Die bewegbare Türe ist zum Beispiel als um eine im Betriebszustand senkrechte Achse schwenkbare Türe ausgebildet. Zum Beispiel ist die Türe an einem Abschnitt des Werkzeugmaschinengehäuses bewegbar gelagert, zum Beispiel an einem Abschnitt eines unteren Laufrollenkastens der Werkzeugmaschine gelagert.

Der Kern der Erfindung liegt darin, dass die Türe eine Dichtung zum Abdichten der Unterdruckkammer nach außen bei verschlossener Türe aufweist, wobei eine Düsenanordnung mit einen ersten Verengungsabschnitt im Nahbereich des Durchlasses der Auflage und/oder mit einem zweiten Verengungsabschnitt im Nahbereich der Auslassöffnung vorgesehen ist, so dass mit einem Verengungsabschnitt bei angeschlossener Unterdruckeinrichtung eine gerichtete Gasströmung in die Unterdruckkammer der Werkzeugmaschine hinein bereitstellbar ist, wobei Gas aus der Umgebung der Werkzeugmaschine durch einen Verengungsabschnitt strömt, wenn ein Unterdruck in der Unterdruckkammer herrscht, so dass Werkstoffpartikel, die durch die trennende Bearbeitung des Werkstücks durch das Sägewerkzeug entstehen, mit der erzeugten Gasströmung in die Unterdruckkammer überführbar oder darin zurückhaltbar sind und wobei im unteren Bereich der Unterdruckkammer ein vertieft ausgebildetes Auffangvolumen für Werkstoffpartikel derart ausgebildet ist, dass die im Gasstrom mitgeführten Werkstoffpartikel sich im Auffangvolumen ansammeln und Werkstoffpartikel aus dem Auffangvolumen aus der Unterdruckkammer über die Saugöffnung der Werkzeugmaschine absaugbar sind. Die Dichtung ist zum Beispiel durchgehend entlang eines Randes der Türe an einer Innenseite der Türe ausgebildet. Zum Beispiel ist die Dichtung eine streifenförmige oder ringartige Dichtung. Zum Beispiel ist die Dichtung als Flachdichtung ausgebildet.

Die Düsenanordnung ermöglicht bei angeschlossener Unterdruckeinrichtung eine gerichtete Gasströmung in einem der Auflage benachbarten Bereich der Umgebung der Werkzeugmaschine mit Gas bzw. Luft aus der Umgebung in die Unterdruckkammer der Werkzeugmaschine hinein und gleichzeitig mit einer Gasströmung das Absaugen der Werkstoffpartikel aus der Unterdruckkammer heraus, zum Beispiel in einem der Auflage abgewandten Bereich der Unterdruckkammer mittels der Saugöffnung. Mit der Gasströmung im Bereich der Auslassöffnung wird am Sägewerkzeug anhaftende Werkstoffpartikel in die Unterdruckkammer gesaugt. Das Sägewerkzeug wird kontinuierlich gesäubert.

Beispielsweise lässt sich eine unerwünschte stärkere Staubentwicklung beim Bearbeiten von Werkstückmaterialien minimieren bzw. vermeiden. Dies geht mit einer minimalen Beeinträchtigung für die bedienende Person oder weitere Personen im Nahbereich der arbeitenden Werkzeugmaschine einher. Dies ist gerade bei Arbeiten innerhalb von Gebäuden oder Räumen von Vorteil.

Zum Beispiel ist die Dichtung randseitig umlaufend an der Türe vorhanden. Zum Beispiel ist die Dichtung z. B. durchgehend umlaufend an der Türe, zum Beispiel randseitig umlaufend an der Türe vorhanden.

Beispielsweise ist die Dichtung aus einem weichen, verformbaren und/oder elastischen Dichtmaterial wie z. B. einem Gummi- oder Schaumstoff-Dichtmaterial gebildet. Die Dichtung ist z. B. als Gummilippen-Dichtung ausgebildet. Die Dichtung ist z B. komprimierbar. Die Dichtung ist z B. streifenförmig. Die Dichtung ist z B. lösbar angebracht an einer Innenseite der Türe, z. B. angeklebt.

Zum Beispiel ist die Dichtung innen an der Türe bzw. auf einer Innenseite der Türe entlang eines Außenrandes der Türe vorhanden. Die Dichtung ist z. B. entsprechend einer viereckigen Grundfläche der Türe bzw. mit winkligem Verlauf vorhanden, z. B. gemäß einem schmalen oder linienförmigen Verlauf.

Beispielsweise ist die ist Auslassöffnung zum Abführen bzw. zum Absaugen der im Gasstrom mitgeführten Werkstoffpartikel in einer Gehäusewand der Werkzeugmaschine im unteren bzw. bodennahen Bereich der Werkzeugmaschine wie z. B. einem Deckel der Unterdruckkammer vorhanden.

Zum Beispiel ermöglicht das Auffangvolumen eine unkritische bzw. kontrollierte Ansammlung von Werkstoffpartikel im Auffangvolumen. Zum Beispiel erfolgt eine temporäre Ansammlung von Werkstoffpartikel im Auffangvolumen, wobei z. B. kontinuierlich ein saugseitig am Auffangvolumen vorhandener Teil der angesammelten Werkstoffpartikel aus dem Auffangvolumen abgesaugt werden.

Zum Beispiel lassen sich Werkstoffpartikel, z. B. sämtliche oder der überwiegende Anteil der entstehenden Werkstoffpartikel, die durch die trennende Bearbeitung des Werkstücks durch das Sägewerkzeug entstehen, aufgrund der Gasströmung in die Unterdruckkammer überführen.

Damit ist für die Bedienperson eine zusätzliche Belastung aufgrund einer verschlechterten Luftqualität ausgeschlossen, was eine Verbesserung der Arbeitssicherheit und der Arbeitsbedingung bedeutet. Außerdem wird eine Verschmutzung von Oberflächen in der Umgebung der Werkzeugmaschine durch sich ablagernde Werkstoffpartikel vermieden bzw. minimiert.

Schließlich wird auch die Werkzeugmaschine selbst geschont, da sich z. B. keine Werkzeugpartikel außen oder im Inneren bzw. auf Innenflächen der Werkzeugmaschine anlagern können. Zum Beispiel werden keine Werkstoffpartikel wie Sägestaub vom Lüfter des Antriebsmotor angesaugt, was für die Funktion des Antriebsmotors vorteilhaft ist.

Beispielsweise lässt sich gezielt der Sägestaub aus Werkstoffpartikel aus der Umgebung und von dem Sägewerkzeug entfernen und in die Unterdruckkammer überführen. Auch werden an dem Sägewerkzeug außen anhaftende Werkstoffpartikel aufgrund der Mitnahmewirkung der Gasströmung von dem Sägewerkzeug entfernen und in die Unterdruckkammer überführt.

Der erste Verengungsabschnitt und der zweite Verengungsabschnitt bilden z. B. eine Engstelle für den Durchlass des Gases wie der Luft aus der Umgebung in das Innere der Unterdruckkammer. Mit einem Verengungsabschnitt wird z. B. eine Querschnittsverengung für das strömende Gas gebildet, was eine Erhöhung der Strömungsgeschwindigkeit des Gases bzw. der Luft bedeutet. Mit dem ersten Verengungsabschnitt und/oder mit dem zweiten Verengungsabschnitt wird eine optimierte Strömungsgeschwindigkeit bereitgestellt.

Zum Beispiel ist zur Gasstromführung der zweite Verengungsabschnitts als Teil eines Verbindungsabschnitts zwischen einem oberen Laufrollenkasten und der Unterdruckkammer vorgesehen. Der Verbindungsabschnitt umfasst beispielsweise eine Umhüllung des Sägewerkzeugs, z. B. in einem vertikal verlaufenden Abschnitt des Verlaufs des Sägewerkzeugs. Zum Beispiel ist der Verbindungsabschnitt seitlich benachbart zu einem Rand der horizontalen Auflage vorhanden.

Beispielsweise weist der obere Laufrollenkasten eine obere Türe auf, mit der das Innere des oberen Laufrollenkastens nach außen verschließbar ist, z. B. gasdicht verschließbar. Zum Beispiel ist über den Verbindungsabschnitt eine für das Gas durchströmbare Verbindung zwischen dem Inneren des oberen Laufrollenkastens und dem Inneren der Unterdruckkammer ausgebildet.

Beispielsweise strömt bei angelegtem Unterdruck bei geschlossener Türe der Unterdruckkammer Gas über den ersten Verengungsabschnitt und über den zweiten Verengungsabschnitt in die Unterdruckkammer hinein und über die Saugöffnung wieder aus der Unterdruckkammer hinaus. Ansonsten ist das Innere der Unterdruckkammer dicht nach außen umschlossen bei geschlossener Türe der Unterdruckkammer.

Die Türe der Unterdruckkammer ist im Arbeitsbetrieb der Werkzeugmaschine zwingend immer geschlossen. Damit kann keine Störungsluft aufgrund der Dichtung der Türe in die Unterdruckkammer einströmen.

Die Unterdruckkammer umfasst zum Beispiel einen unteren Laufrollenkasten. Die Unterdruckkammer ist zum Beispiel als ein unterer Laufrollenkasten ausgebildet. Der untere Laufrollenkasten weist z. B. eine vom Antriebsmotor drehend angetriebene untere Laufrolle auf, um welches das Sägewerkzeug außen teilumfänglich geführt und mitgenommen wird, von oben an einer Seite der Laufrolle tangential kommend und auf der anderen Seite der Laufrolle nach oben tangential weglaufend. Über das Sägewerkzeug, das im oberen Laufrollenkasten ebenfalls teilumfänglich um eine obere Laufrolle geführt ist, wird auch die obere drehgelagerte Laufrolle angetrieben. Zum Beispiel weist der obere Laufrollenkasten ebenfalls eine bewegbar wie eine schwenkbare Türe auf, die mit einer Dichtung zum Abdichten des oberen Laufrollenkastens nach außen bei verschlossener Tür versehen ist. Zum Beispiel ist die Türe des oberen Laufrollenkastens an einem Abschnitt des Werkzeugmaschinengehäuses bewegbar gelagert, zum Beispiel an einem Abschnitt eines oberen Laufrollenkastens der Werkzeugmaschine gelagert.

Die Unterdruckkammer ist zum Beispiel als unterer Laufrollenkasten ausgebildet. Zum Beispiel ist der Verbindungsabschnitt als ein Verbindungskanal ausgebildet. Der Verbindungsabschnitt ist zum Beispiel als ein vergleichsweise schmaler das Sägewerkzeug umgebender Verbindungskanal ausgebildet. Der Verbindungsabschnitt ist zum Beispiel senkrecht ausgerichtet in einem senkrecht verlaufenden Abschnitt des Sägewerks ausgebildet. Der Verbindungsabschnitt ist zum Beispiel als hohler vierkantförmiger Verbindungskanal ausgebildet. Zum Beispiel grenzt ein unteres Ende des Verbindungsabschnitts an eine Oberseite der Unterdruckkammer an.

Zum Beispiel grenzt ein oberes Ende des Verbindungsabschnitts an eine Unterseite des oberen Laufrollenkastens an. Zum Beispiel verbindet der Verbindungsabschnitt das Innere des oberen Laufrollenkastens mit dem Inneren der Unterdruckkammer. Der Verbindungsabschnitt ist z. B. nach außen dicht ausgebildet zur Vermeidung oder Minimierung eines Falschluftstromes bzw. zur Vermeidung oder Minimierung einer Störungsluft. Andernfalls würde zusätzlich zum vorhandenen Gasstrom Störungsluft durch den im Inneren des Verbindungsabschnitt herrschenden Unterdruck aus der Umgebung in das Innere des Verbindungsabschnitts strömen, was die Unterdruckwirkung nachteilig beeinflussen würde und damit zu einer weniger effektiven Abführung von Werkstoffpartikel führen würde.

Zum Beispiel umfasst der erste Verengungsabschnitt, z. B. im Bereich des Durchlasses der Auflage, eine erste Düse. Zum Beispiel ist der erste Verengungsabschnitt, z. B. im Bereich des Durchlasses der Auflage, als eine erste Düse ausgebildet. Zum Beispiel umfasst der erste Verengungsabschnitt die erste Düse. Beispielsweise umfasst die erste Düse ein Düsenbauteil. Beispielsweise ist die erste Düse als Düsenbauteil ausgebildet.

Zum Beispiel ist das Düsenbauteil als ein separates Bauteil der Werkzeugmaschine ausgebildet. Zum Beispiel führt das Sägewerkzeug durch das Düsenbauteil durch, von oberhalb der Auflage bis in die Unterdruckkammer unterhalb der Auflage. Zum Beispiel führt das Sägewerkzeug durch einen Abschnitt, z. B. ein schlitzförmiger Spalt, des Düsenbauteils durch. Die Längsrichtung des Spalts verläuft in Sägerichtung bzw. in Richtung der Längsbewegung der Auflage. Die Längs-Bewegung dient zur Bewegung des auf der Auflage aufgelegten Werkstücks beim trennenden Bearbeiten entlang des Sägewerkzeugs.

Beispielsweise weist das Düsenbauteil einen Sockel und einen zu einer Oberseite des Sockels erhöhten Stegabschnitt mit dem Spalt auf. Der Spalt verläuft z. B. in Längsrichtung des Stegabschnitts. Zum Beispiel weist der Stegabschnitt parallel gegenüberliegende Stegwände auf, nachfolgend gleichbedeutend als Wände bezeichnet. Die Wände weisen quer zur Längsrichtung des Stegabschnitts bzw. des Spalts bzw. der Wände einen freien spaltartigen Abstand auf. Beispiel stehen die Wände nach oben etwas mehr über den Sockel über, z. B. in einem Maß einer Dicke der Auflage. Beispielsweise weist das Düsenbauteil eine ebene Oberseite des Sockels auf, an dem die Wände rechtwinklig nach oben abstehen. Das Düsenbauteil ist z. B. auf den Durchlass der Auflage, z. B. eine dazugehörige Aussparung oder Öffnung in der Auflage, derart abgestimmt, dass das Düsenbauteil mit den Wänden durch den Durchlass in der Auflage passend durchgreifen.

Beispielsweise ist das Düsenbauteil im Bereich einer Öffnung in einem oberen Teil eines Deckels eines Gehäuses der Unterdruckkammer vorhanden z. B. an der Öffnung des Gehäuses der Unterdruckkammer einsetzbar. Die Öffnung des Gehäuses der Unterdruckkammer befindet sich in Verlängerung des Durchlasses der Auflage, z. B. in Verlängerung eines als ein an einem Auflagerand offenen Schlitz ausgebildeten Durchlasses der Auflage.

Zum Beispiel ist das Düsenbauteil mit einer überstehenden Höhe der Wände so abgestimmt, dass eine schmale Oberseite der Wände bündig mit der Oberseite der Auflage ist. Ein Abschnitt der Unterseite der Auflage stützt sich auf der Oberseite des Sockels ab und kann daran entlanggleiten beim linearen Verschieben der Auflage. Damit bleibt über den gesamten möglichen linearen Verschiebeweg der Auflage eine Düsenwirkung für den Gasstrom im Bereich des Durchlasses bzw. des durch die Auflage tretenden Sägewerkzeugs ins Innere der Unterdruckkammer erhalten.

Im Bereich des Spalts bzw. des Abstandes der Wände verläuft das Sägewerkzeug durch und weiter in die Unterdruckkammer. Der Abstand der Wände bildet einen länglichen Spalt, dessen Breite auf eine Breite des Sägewerks abgestimmt ist. Die Breite des Spalts ist so bemessen, dass eine jeweilige Außenseite des Sägewerkzeugs nur im Millimeterbereich oder im Bereich eines Bruchteils eines Millimeters beabstandet ist von einer zugehörigen benachbarten Wand der beiden Wände des Düsenbauteils. Im Bereich des Abstandes strömt Luft aus der Umgebung am Sägewerkzeug und an den Innenseiten der Wände vorbei ins Innere der Unterdruckkammer unterhalb der Auflage und weiter in Richtung des Auffangvolumens und weiter zur Saugöffnung.

Zum Beispiel ist das Düsenbauteil an dem Gehäuse wie dem Deckel des Gehäuses der Unterdruckkammer montiert, z. B. angeschraubt. Zum Beispiel ist das Düsenbauteil so montiert, dass der Spalt zwischen den Wänden des Düsenbauteils in Verlängerung der Öffnung des Gehäuses der Unterdruckkammer vorhanden. Zum Beispiel ist das Düsenbauteil bzw. der Spalt zwischen den Wänden nach unten offen zum Inneren der Unterdruckkammer.

Zum Beispiel ist das Düsenbauteil mit Schraubmitteln am verbleibenden Teil der Werkzeugmaschine wie dem Gehäuse der Unterdruckkammer lösbar angebracht.

Somit strömt Gas bzw. Luft aus der Umgebung am Werkstück und durch den Spalt des Düsenbauteils zwischen den Wänden des Düsenbauteils am Sägewerkzeug vorbei und nimmt Werkstoffpartikel direkt dort auf, wo die Werkstoffpartikel nach dem Trennen vom restlichen Werkstück entstehen. Im weiteren Strömungsverlauf gelangen die Werkstoffpartikel unmittelbar in das Innere der Unterdruckkammer. Außen an der Werkzeugmaschine fällt nahezu kein Sägestaub an.

Die Unterdruckkammer der Werkzeugmaschine ist z. B. ein Inneres des unteren Laufrollenkastens. Zum Beispiel schließt sich die Unterdruckkammer an eine Unterseite der Auflage an.

Die Absaugung der Werkstoffpartikel erfolgt bei angeschlossener und laufender Unterdruckeinrichtung zum Beispiel zeitgleich mit dem angetrieben umlaufenden Sägewerkzeug insbesondere zur kontinuierlichen Abführung von Werkstoffpartikeln während des Arbeitsbetriebs.

Beispielsweise ist das Sägewerkzeug ein flexibles Sägewerkzeug, wie ein Sägeband, Bandsägeblatt, Sägedraht.

Zum Beispiel ist außen an der Werkzeugmaschine, z. B. in einem bodennahen Bereich der Werkzeugmaschine die Saugöffnung zum Anschluss einer Unterdruckeinrichtung einer Unterdruck- oder Saugeinrichtung an die Unterdruckkammer ausgebildet. Zum Beispiel ist die Saugöffnung zum Anschluss einer Saugleitung eines Staub- oder Industriesaugers ausgebildet. Beispielsweise ist der Staub- oder Industriesauger nicht Teil der Werkzeugmaschine. Mit dem laufenden angeschlossenen Industriesauger wird ein Unterdruck in der Unterdruckkammer erzeugt. Grundsätzlich kann eine Unterdruckeinrichtung oder ein Sauger auch integraler Bestandteil der Werkzeugmaschine sein.

Hinsichtlich der trennenden Bearbeitung des Werkstücks durch ein schnell umlaufendes Sägewerkzeug der Werkzeugmaschine ist darunter zum Beispiel eine Materialabtragung am Werkstück durch einen abrasiven oder brüchigen Prozess zu verstehen. Zum Beispiel ist dies ein schleifähnlicher Prozess oder ähnelt dieser Prozess einem abrasiven Prozess.

Ein derartiger Materialabtrag erfolgt zum Beispiel beim Sägen von Ziegelmaterial oder ähnlichen spröden Materialien wie z. B. Beton- oder Stein-Materialien. Beispielsweise beim Sägen von Ziegel oder anderen spröden Materialien mit einem Sägeband wie z. B. einem Diamant-Sägeband ist die Materialabtragung vergleichbar mit einem schleifenden Prozess. Beim Bearbeiten tragen zum Beispiel feine Partikel wie Diamantkörner, die fest auf der Oberfläche des Sägebandes bzw. auf einem Grundkörper des Sägebandes vorhanden sind, das Material des Werkstücks ab. Dabei lösen die Diamantpartikel mikroskopische Partikel aus der Oberfläche des Werkstücks heraus.

Beispielsweise erfolgt damit eine abrasive Abtragung des Materials des Werkstücks, wobei die Schneidpartikel des Sägewerkzeugs das Material abtragen. Zum Beispiel erfolgt alternativ oder überlagernd zum abrasivem Abtragen ein Sprödbruch des spröden Materials des Werkstücks, wobei das Material in vergleichsweise kleine Partikel zerbricht, wenn die Schneidpartikel des Sägebandes auf die Oberfläche des Werkstück-Materials treffen.

Darüber hinaus können beim trennenden Bearbeiten z. B. thermische Einflüsse herrschen, da der Trennprozess oft Reibungswärme erzeugt, vergleichbar mit dem Schleifen von Materialien.

Beispielsweise entstehen beim trennenden Bearbeiten feine Partikel wie Staubpartikel wie z. B. Ziegelsplitter.

Beispielsweise umfasst die Düsenanordnung eine erste Düse, welche den ersten Verengungsabschnitt bereitstellt. Zum Beispiel ist der erste Verengungsabschnitt als Düsenbauteil ausgebildet. Beispielsweise umschließt die erste Düse mit einem geringen Spaltmaß außen das Sägewerkzeug, z. B. im Millimeterbereich das Sägewerkzeug, wobei der materialfreie Spalt ein Ansaugen und Durchströmen von Gas bzw. Luft aus der Umgebung der Werkzeugmaschine ins Innere der Unterdruckkammer ermöglicht.

Zum Beispiel ist die erste Düse als eine Absaugdüse ausgestaltet, welche in unmittelbarer Nähe einer Bearbeitungszone bzw. Schneidzone der Werkzeugmaschine am Durchlass der Auflage und außen um einen Längsabschnitt des Sägewerkzeugs herum vorhanden ist, z. B. unterhalb des Bereichs, wo am Werkstück das Abtragen von Werkstoffpartikel durch das Sägewerkzeug erfolgt.

Zum Beispiel ist die erste Düse an einem oberen Deckel des Gehäuses der Unterdruckkammer vorhanden. Der Deckel grenzt z. B. an eine Unterseite der Auflage, die relativ zum Deckel verschieblich ist. Zum Beispiel ist die erste Düse an der Öffnung des Gehäuses der Unterdruckkammer für den Durchtritt des Sägewerkzeugs vorhanden. Zum Beispiel erstreckt sich die erste Düse durch die Auflage bzw. durch die Dicke der Auflage durch. Der Spalt der Wände des Düsenbauteils mündet unterseitig in den Bereich der Unterdruckkammer hinein bzw.in das Innere der Unterdruckkammer zur Weiterführung des Gasstroms in das Innere der Unterdruckkammer, samt der mitgenommenen Werkstoffpartikel.

Zum Beispiel umfasst die erste Düse ein separates Düsenbauteil. Zum Beispiel ist die erste Düse durch das separate Düsenbauteil gebildet. Zum Beispiel umfasst die erste Düse das separate Düsenbauteil, ein Vorspannelement und ein Befestigungsorgan. Zum Beispiel ist das Vorspannelement ein elastisches Vorspannelement wie z. B. ein Schaumstoff- und/oder ein Gummi- und/oder ein Elastomerkörper. Zum Beispiel umfasst das Befestigungsorgan eine Befestigungsplatte.

Zum Beispiel ist die erste Düse als ein separates Düsenbauteil gebildet, das an der Unterdruckkammer bzw. dessen Gehäuse fest vorhanden oder lösbar montiert ist.

Alternativ ist die erste Düse zum Beispiel integraler Bestandteil der Unterdruckkammer, z. B. zur Bereitstellung der Öffnung im Gehäuse der Unterdruckkammer.

Zum Beispiel umfasst die erste Düse, wie das Düsenbauteil, einen Düsenabschnitt, der unterhalb der Unterseite der Auflage vorhanden ist, z. B. der Sockel. Zum Beispiel ist die erste Düse ein Bauteil bzw. einteilig.

Zum Beispiel umfasst die Düsenanordnung eine zweite Düse, welche den zweiten Verengungsabschnitt bereitstellt.

Zum Beispiel ist die zweite Düse als eine Absaugdüse ausgebildet. Die zweite Düse ist z. B. so nah wie möglich an der Auslassöffnung der Unterdruckkammer für den Durchtritt des Sägewerkzeugs vorhanden. Zum Beispiel ist die zweite Düse als separates Düsenbauteil ausgebildet oder integraler Bestandteil der Unterdruckkammer oder des Werkzeugmaschinengehäuses.

Beispielsweise ist die Werkzeugmaschine als Mineralwerkstoff-Sägemaschine ausgebildet. Zum Beispiel ist die Werkzeugmaschine als Bauwerkstoff-Sägemaschine ausgebildet.

Zum Beispiel ist die Werkzeugmaschine als Werkstoff-Sägemaschine derart ausgebildet, dass folgende Materialien oder Baustoffe, umfassend mineralische Werkstoffe, Dämmstoffe und kombinierte Werkstoffe, mit der Werkzeugmaschine bearbeitet werden können: Lochziegel, Ziegelsteine, Mauersteine, Porenbeton, Naturstein, Beton, Polystyrol-Hartschaum bzw. EPS, z. B. Styropor, extrudierter Polystyrol-Hartschaum bzw. XPS wie Styrodur, Polyurethan bzw. PU, Polyisocyanurat-Hartschaum bzw. PIR, Materialien mit Deckschicht aus Aluminium oder Mineralvlies, Phenolharzschaum, Bakelit, Resol-Hartschaumplatten, Verbundschaum, Polyesterfaserstoffe, Mineralwolle wie Steinwolle oder Glaswolle, verfüllter Lochziegel, Dämmstoff-integrierter Hochlochziegel, Thermo-Verbundziegel.

Zum Beispiel ist die Werkzeugmaschine ausgebildet zur trennenden Bearbeitung eines Werkstücks. Zum Beispiel ist die Werkzeugmaschine als Bandsäge-Werkzeugmaschine ausgebildet, z. B. als Stein-Bandsägemaschine. Zum Beispiel ist die Werkzeugmaschine zur trennenden Bearbeitung eines Werkstücks aus einem Beton-, Stein- oder anderen harten Mineral-Werkstoff ausgebildet.

Zum Beispiel ist die Werkzeugmaschine als Beton-Sägemaschine, Stein-Sägemaschine, Ziegelstein-Sägemaschine, Porenbeton-Sägemaschine, Bodenstein-Sägemaschine, Mauerstein-Sägemaschine, Naturstein-Sägemaschine, Stein-Werkstoff-Sägemaschine ausgebildet. Zum Beispiel ist die Werkzeugmaschine ausgebildet zum Sägen bzw. trennenden Bearbeiten von Materialien wie z. B. Marmor, Granit oder Kalkstein.

Zum Beispiel ist die Saugöffnung der Werkzeugmaschine mit dem Auffangvolumen verbunden.

Beispielsweise ist die Saugöffnung für einen Anschluss oder eine Verbindung wie z. B. eine Steckverbindung zur Anbringung eines Absaugschlauches ausgebildet, zum Beispiel einer Unterdruckeinrichtung wie einem Staub- oder Industriesauger.

Beispielsweise ist in der Unterdruckkammer eine untere Laufrolle drehbar vorhanden, um welches das Sägewerkzeug umfänglich geführt vorgesehen ist, wobei das Auffangvolumen für Werkstoffpartikel unterhalb der unteren Laufrolle ausgebildet ist.

Zum Beispiel ist die untere Laufrolle mit dem Antriebsmotor drehend antreibbar. Beispielsweise ist das Auffangvolumen in einem bodennahen Bereich der Unterdruckkammervorhanden. Zum Beispiel ist das Auffangvolumen als ein Vertiefungsbereich ausgebildet.

Zum Beispiel ist das Auffangvolumen als Rinne oder Wanne ausgebildet. Zum Beispiel ist das Auffangvolumen durch ein separates Bauteil gebildet. Zum Beispiel ist das Auffangvolumen als eine Auffangmulde, mit einem Auffangvolumen zur Ansammlung von Werkstoffpartikel und/oder zur Zwischenspeicherung von Werkstoffpartikel ausgebildet.

Zum Beispiel ist das Auffangvolumen angrenzend und offen zu einer Verbindung mit der Saugöffnung, z. B. offen zu einer Absaugleitung, in welcher Unterdruck anlegbar ist im Arbeitsbetrieb. Die Absaugleitung führt z. B. zur Saugöffnung.

Zum Beispiel ist ein Auffangelement zur Bereitstellung des Auffangvolumens derart ausgebildet, dass das Auffangelement zwei unterteilte Volumenbereiche des Auffangvolumens aufweist. Zum Beispiel ist das Auffangvolumen oberseitig offen zur Zuführung von Werkstoffpartikel mit der Gasströmung. Zum Beispiel ist das Auffangvolumen unten offen in das Innere der Verbindung zur Saugöffnung bzw. offen zu einer Absaugleitung zum durch Schwerkraft unterstützten Abführung und zum Absaugen der Werkstoffpartikel über die Absaugleitung und die Saugöffnung aus der Unterdruckkammer nach außen.

Zum Beispiel umfasst das Auffangelement genau zwei oder genau drei oder genau vier unterteilte Volumenbereiche des Auffangvolumens. Zum Beispiel sind die Volumina der mehreren Volumenbereiche des Auffangvolumens untereinander identisch oder unterschiedlich untereinander.

Zum Beispiel ist ein Auffangelement als Auffangwanne mit mehreren Volumenbereichen ausgebildet, z. B. mit zwei gleichartigen oder identischen Teilvolumina.

Beispielsweise weist das Auffangvolumen eine Unterteilung der mehreren voneinander über eine Wandung vollständig oder teilweise getrennten Volumenbereichen, z. B. trichterartige Teilvolumina, die z. B. unten offen sind zu einer Absaugleitung.

Beispielsweise ist das Auffangelement als ein separat vorhandenes Bauteil der Werkzeugmaschine realisiert. Zum Beispiel ist das separat vorhandene Bauteil anschraubbar an einem verbleibenden Teil der Werkzeugmaschine. Zum Beispiel ist das separate Bauteil bzw. das Auffangelement mit der Absaugleitung verbunden und offen zum Inneren der Absaugleitung.

Beispielsweise ist das Auffangvolumen über eine Verbindung mit der Saugöffnung verbunden.

Zum Beispiel ist die Verbindung als Absaugleitung ausgebildet, zur Absaugung von Werkstoffpartikel mit dem Gasstrom aus dem Auffangvolumen wie z. B. einem Vertiefungsbereich nach außen.

Beispielsweise ist die Absaugleitung zwischen dem Auffangvolumen und der Saugöffnung ausgebildet. Zum Beispiel ist die Absaugleitung eine hohle Leitung, die bezogen auf einen Aufstellzustand der Werkzeugmaschine z. B. horizontal oder schräg nach unten ausgerichtet bzw. zur Horizontalen nach unten leicht geneigt ist.

Zum Beispiel ist die Werkzeugmaschine ist für einen Trockensäge-Arbeitsbetrieb ausgebildet.

Beispielsweise ist die Werkzeugmaschine für einen Arbeitsbetrieb ausgebildet, der ohne Flüssigkeit bzw. z. B. ohne Wasser oder Emulsion eingerichtet ist. Es kann damit auf Flüssigkeit verzichtet werden, die ansonsten zur Kühlung und zur Schneidstaubreduzierung vorgesehen ist. Mit der effektiven Absaugung, Sammlung und Abführung der Werkstoffpartikel ist vorteilhaft keine Spül- oder Kühlflüssigkeit notwendig. Beispielsweise ist die Werkzeugmaschine ausgebildet für ein Arbeiten im Trockentrenn- oder im Trockensägeverfahren.

Zum Beispiel weist die erste Düse und/oder die zweite Düse ein Düsenbauteil auf, wobei das Düsenbauteil beweglich gelagert und/oder geführt ist relativ zum Werkzeugmaschinengehäuse. Zum Beispiel ist das Düsenbauteil ein separates Bauteil. Zum Beispiel weist das Düsenbauteil eine Oberseite auf, die flächig an einer Unterseite der Auflage in Anlage ist.

Mit dem Düsenbauteil wird eine Saugleistung der Düsenanordnung bis unter das Werkstück bzw. bis unter den Schnittbereich bringbar. Zum Beispiel ist das Düsenbauteil derart abgestimmt, dass ein Bereich zwischen der Auflage und einem daran unterhalb anschließenden Bereich des Werkzeugmaschinengehäuses bzw. der Unterdruckkammer abgedichtet ist. Zum Beispiel ist das Düsenbauteil derart abgestimmt, dass in allen möglichen Relativpositionen zwischen Düsenbauteil und Auflage die Abdichtung sicher eingerichtet ist. Die Abdichtung bleibt in allen linear verschobenen Stellungen relativ zur Unterdruckkammer erhalten. Die Abdichtung bleibt auch in sämtlichen möglichen Schwenkstellungen der Auflage relativ zur Unterdruckkammer erhalten, z. B. mit dem daran unterseitig angedrückt vorhandenen Düsenbauteil. Das Düsenbauteil wird z. B. mit der Auflage mitverschwenkt.

Zum Beispiel ist das Düsenbauteil verschwenkbar gelagert vorhanden, z. B. derart, dass das Düsenbauteil entsprechend eine mögliche Schwenkbewegung der Auflage mitgeht bzw. dabei immer in Anlage an einer Unterseite der Auflage bleibt. In Richtung der linearen Bewegung der Auflage ist das Düsenbauteil festgehalten, gegebenenfalls mit geringem Spiel im Millimeterbereich. Zum Beispiel ist das Düsenbauteil an einem Befestigungsorgan gelagert bzw. schwenkbar aber linear in horizontaler Richtung fest aufgenommen. Dies ist auch weiter unten noch diskutiert.

Beispielsweise weist das Düsenbauteil einen Sockel und einen zu einer Oberseite des Sockels erhöhten Stegabschnitt auf. Zum Beispiel umfasst der Stegabschnitt genau zwei erhöhte Stegabschnitte. Stegabschnitt ist der Stegabschnitt durch genau zwei getrennte Stegabschnitte gebildet. Zum Beispiel sind genau zwei Stegabschnitte vorhanden, die in Längsrichtung des Durchlasses beabstandet sind zueinander. Zum Beispiel stehen beide Stegabschnitte in den Durchlass hinein. Zum Beispiel reichen beide Stegabschnitte nicht über eine von der Auflageseite vorgegebene Ebene hinaus. Zum Beispiel sind beide Stegabschnitte mit deren freien Ende bündig mit der Auflageseite, z. B. bündig mit der von der Auflageseite gebildeten Ebene oder zumindest nahezu bündig, z. B. um einen oder wenige Millimeter versetzt unterhalb zur Ebene der Auflageseite.

Zum Beispiel weist genau ein Stegabschnitt, z. B. ein vorderer Stegabschnitt einen Längsspalt auf. Der Spalt verläuft z. B. in Längsrichtung des Stegabschnitts bzw. parallel und mittig zum Durchlass in der Auflage. Beispielsweise ist das Düsenbauteil derart abgestimmt vorhanden, dass aufgrund der Vor- und/oder Rückbewegung der Auflage während der Werkstück-Bearbeitung relativ zur Unterdruckkammer anfallende Werkstoffpartikel, umherfliegende und auch an der Auflage und anderen Oberflächen kurzfristig anhaftende Werkstoffpartikel, mitgenommen und/oder gelöst werden und von der Gasströmung mitgenommen bzw. abtransportiert werden. In der vertikalen Richtung, z. B. quer bzw. senkrecht zur Oberseite der Auflage, übernimmt das Werkstück wie das Schnittgut diese partikel-lösende Wirkung.

Damit wird vorteilhaft ein Verstopfen des Durchlasses in der Auflage effektiv vermieden, was andernfalls durch z. B. Werkstoffpartikel bzw. Schneidmedien wie Steinausbrüche oder Dämmstoffpartikel zu beobachten ist.

Beispielsweise ist das Düsenbauteil von einem Vorspannelement in Richtung der Auflage vorgespannt. Zum Beispiel ist das Vorspannelement ein Element aus einem Schaumstoff, einem Elastomer- und/oder einem Gummimaterial. Zum Beispiel ist das Vorspannelement als eine plattenartiges Schaumstoffelement ausgebildet. Zum Beispiel ist das Vorspannelement ein ober- und unterseitig flächiges und/oder ebenes Schaumstoffelement.

Zum Beispiel ist das Vorspannelement Teil der Düsenanordnung. Zum Beispiel ist das Vorspannelement ein separates Bauteil. Zum Beispiel ist das Vorspannelement unterhalb des Düsenbauteils vorhanden. Zum Beispiel drückt das Vorspannelement dauerhaft das Düsenbauteil gegen die Auflage z. B. gegen die Unterseite der Auflage. Zum Beispiel ist das Vorspannelement positionsfest relativ zum Werkzeuggehäuse bzw. zur Unterdruckkammer vorhanden. Zum Beispiel ist das Vorspannelement elastisch verformbar, wie aus einer Ausgangsform zusammendrückbar und selbsttätig wieder expandierbar in die Ausgangsform. Zum Beispiel ist das Vorspannelement über eine gesamte unterseitige Fläche des Düsenbauteils auf das Düsenbauteil wirkend, z. B. in Anlagekontakt an der gesamten Unterseite des Düsenbauteils vorhanden.

Zum Beispiel ist ein Befestigungsorgan vorgesehen, wobei das Befestigungsorgan zur Lagerung und/oder Führung des Düsenbauteils ausgebildet ist. Zum Beispiel ist das Befestigungsorgan als eine Befestigungsplatte ausgebildet. Zum Beispiel ist das Befestigungsorgan positionsfest an dem Werkzeuggehäuse bzw. oberseitig an der Unterdruckkammer im Bereich des Durchlasses für das Sägewerkzeug vorhanden. Zum Beispiel umfasst das Befestigungsorgan eine metallische Platte mit einer Öffnung zum Durchlass des Sägewerkzeugs und mit einer weiteren Öffnung, an welche ein Vorsprung am Düsenbauteil aufgenommen ist, z. B. zur Lagerung und/oder Führung des Düsenbauteils. Zum Beispiel ist zwischen dem Befestigungsorgan und dem Düsenbauteil das Vorspannelement vorhanden.

Beispielsweis steht der Vorsprung am Düsenbauteil in entgegengesetzter Richtung zu den Stegabschnitten z. B. nach unten ab an dem Düsenbauteil.

Der Sockel des Düsenbauteils reicht z. B. beidseitig des Durchlasses in den Bereich unterhalb der Auflage. In einem zentralen, z. B. einem mittleren Teil des Düsenbauteils sind die beiden Stegabschnitte und dazwischen eine Düsenöffnung zum Durchlass des Sägewerkzeugs vorhanden. Die Düsenöffnung ist z. B. identisch geformt und fluchtend zur entsprechenden Öffnung zum durchführen des Sägewerkzeugs im Befestigungsorgan.

### Figurenbeschreibung

Weitere Merkmale und Vorteile der Erfindung sind anhand der in den Figuren schematisch dargestellten Ausführungsbeispiele näher erläutert. Im Einzelnen zeigt:
- Fig. 1: eine Werkzeugmaschine, die perspektivisch und schräg von oben dargestellt ist mit einem angedeuteten Umriss eines Werkstücks,

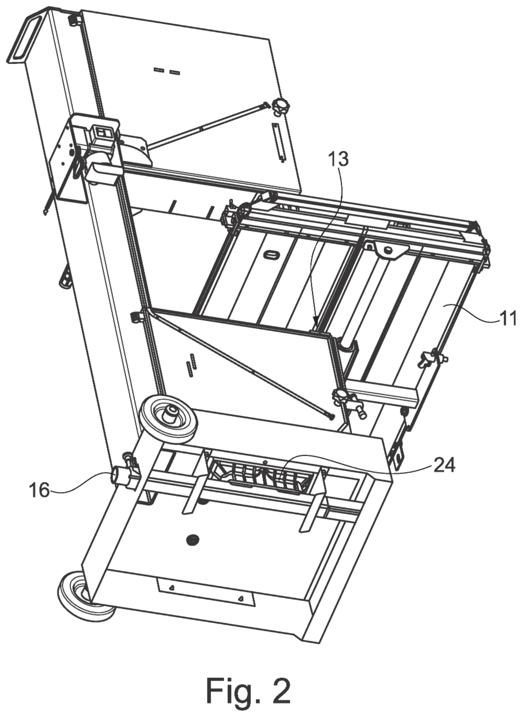

- Fig. 2: die Werkzeugmaschine gemäß Fig. 1 schräg von unten,
- Fig. 3: einen unteren Ausschnitt der Werkzeugmaschine gemäß Fig. 1 schräg von oben unter Weglassung von Elementen der Werkzeugmaschine,

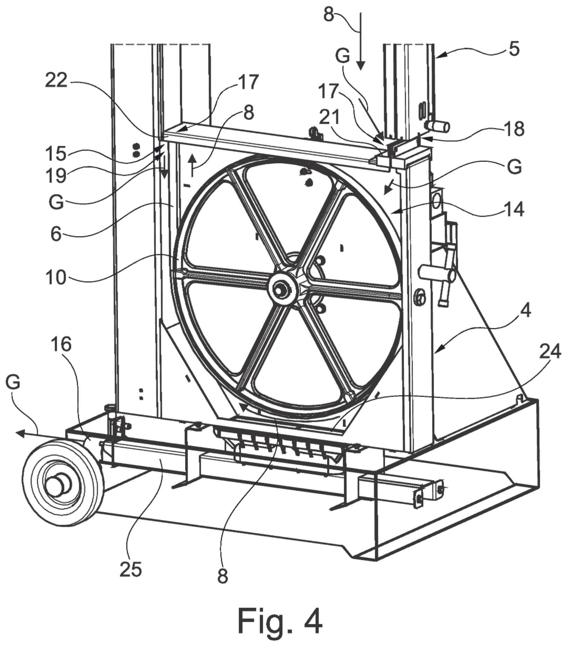

- Fig. 4: einen weiteren unteren Ausschnitt der Werkzeugmaschine gemäß Fig. 1 ohne eine Auflage und ohne eine untere Türe und mit teilweise transparent dargestellten Gehäusebauteilen der Werkzeugmaschine,
- Fig. 5: eine perspektivische Detailansicht eines Düsenbauteils der Werkzeugmaschine gemäß Fig. 1,
- Fig. 6: ein weiteres Bauteil der Werkzeugmaschine gemäß Fig. 1 in perspektivischer Ansicht,
- Fig. 7: eine perspektivische Teilansicht von schräg vorne auf eine Werkzeugmaschine im Bereich einer teils transparent dargestellten Auflage mit einem angedeuteten Werkstück mit einem alternativen Düsenbauteil,
- Fig. 8: einen vergrößerten Ausschnitt der Werkzeugmaschine gemäß Fig. 7 im Bereich des Düsenbauteils, wobei ein Teil der Auflage weggelassen ist,
- Fig. 9: einen weiteren Teilausschnitt der Werkzeugmaschine gemäß Fig. 7 mit dem Düsenbauteil bei verschwenkter Auflage von der Seite und
- Fig. 10: einen vergrößerten Ausschnitt der Anordnung gemäß Fig. 9 schräg von oben.

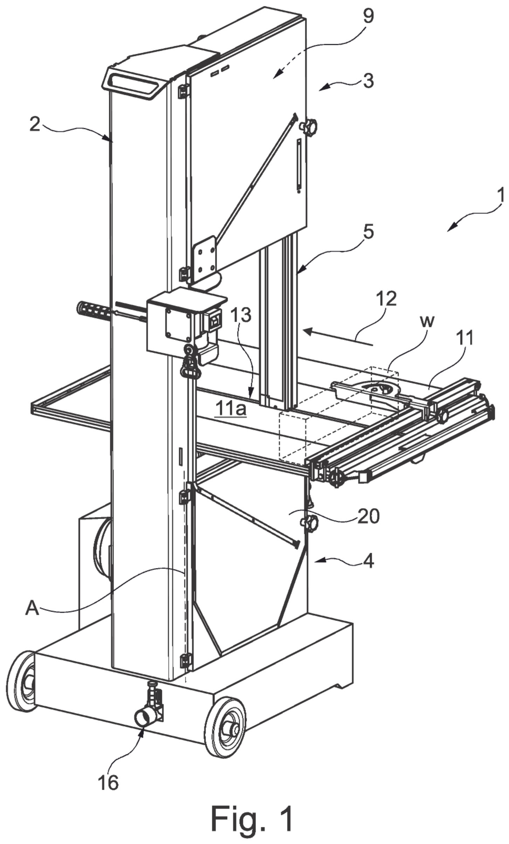

Fig. 1 zeigt eine schematisierte Werkzeugmaschine 1 mit einem Werkzeugmaschinengehäuse 2, einem oberen Laufrollenkasten 3, einem unteren Laufrollenkasten 4 und einem vertikal verschieblichen Schutzblech 5 für ein Sägewerkzeug 6 (in Fig. 1 verdeckt). Das in Fig. 1 bis zu einer Oberseite einer Auflage 11 verschobene Schutzblech 5 wird im Arbeitsbetrieb nur bis oberhalb eines zu bearbeitenden Werkstücks W nach unten verschoben, so dass ein freier Abschnitt des nicht vom Schutzblech 5 umgebenen Sägewerkzeugs 6 das Werkstück W bearbeiten bzw. durchtrennen kann.

Die Werkzeugmaschine 1 ist beispielhaft als Mineralwerkstoff-Sägemaschine ausgebildet. Beispielsweise ist die Werkzeugmaschine 1 ist für einen Trockensäge-Arbeitsbetrieb ausgebildet.

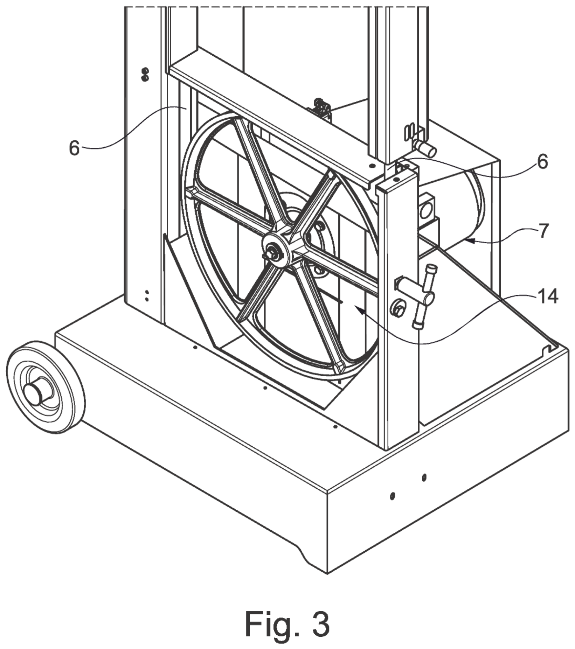

Die Werkzeugmaschine 1 weist einen in Fig. 3 ersichtlichen Antriebsmotor 7 für das Sägewerkzeug 6 auf, wobei in einem Arbeitsbetrieb ein trennendes Bearbeiten eines in Fig. 1 nur angedeuteten Werkstücks W erfolgt. Das Sägewerkzeug 6 ist hierbei mit dem Antriebsmotor 7 in einer Umlaufrichtung 8 des Sägewerkzeugs 6 umlaufend antreibbar. Das Sägewerkzeugs 6 ist außen um eine nicht ersichtliche obere Laufrolle 9 und um eine untere Laufrolle 10 geführt. Die untere Laufrolle 10 ist vom Antriebsmotor 7 angetrieben rotierbar um eine horizontale Achse, wobei das Sägewerkzeug 6 in Umlaufrichtung 8 angetrieben ist.

In Fig. 3 sind eine Türe 20, die Auflage 11 und eine Düse 21 nicht dargestellt.

Eine obere Auflageseite 11a der Auflage 11 der Werkzeugmaschine 1 dient zur Abstützung des zu bearbeitenden Werkstücks W im Arbeitsbetrieb, wobei die Auflage 11 bewegbar am verbleibenden Teil der Werkzeugmaschine 1 aufgenommen ist. Die Auflage 11 ist entlang der Richtung einer Linearachse 12 vor und zurück linear verschieblich und mit der Auflage 11 das Werkstück W, das vom Sägewerkzeug 6 trennend bearbeitet wird.

Die Auflage 11 weist einen Durchlass 13 für das Sägewerkzeug 6 auf, so dass sich das Sägewerkzeug 6 durch den Durchlass 13 in eine Unterdruckkammer 14 der Werkzeugmaschine 1 hinein erstreckt.

Das Sägewerkzeug 6 tritt aus der Unterdruckkammer 14 in Umlaufrichtung 8 aus der Unterdruckkammer 14 über eine Auslassöffnung 15 aus. Im Arbeitsbetrieb anfallende Werkstoffpartikel sind aus der Unterdruckkammer 14 abführbar, wenn ein Unterdruck in der Unterdruckkammer 14 herrscht und eine Absaugung der Werkstoffpartikel nach außen erfolgt. Zum Beispiel ist hierfür eine nicht dargestellte Unterdruckeinheit vorgesehen, die an der Werkzeugmaschine 1 anschließbar ist. Zum Beispiel ist eine Saugseite einer Unterdruckeinheit, wie zum Beispiel ein Staub- oder Industriesauger, an einer Saugöffnung 16 der Werkzeugmaschine 1 anschließbar. Die Saugöffnung 16 ist mit einem Inneren der Unterdruckkammer 14 verbunden.

Eine Düsenanordnung 17 mit einen ersten Verengungsabschnitt 18 im Nahbereich des Durchlasses 13 der Auflage 11 und/oder mit einem zweiten Verengungsabschnitt 19 im Nahbereich der Auslassöffnung 15 ist derart vorgesehen, dass mit einem Verengungsabschnitt 18, 19 bei angeschlossener Unterdruckeinrichtung eine gerichtete Gasströmung G mit Gas bzw. Luft aus der Umgebung in die Unterdruckkammer 14 der Werkzeugmaschine 1 hinein bereitstellbar ist.

Eine um eine vertikale Achse A schwenkbare Türe 20 dient in geschlossener Stellung dazu, die Unterdruckkammer 14 auf einer Seite von außen im Arbeitsbetrieb zu verschließen und in einer geöffneten Stellung zeitweise zugänglich zu halten.

Im unteren Bereich der Unterdruckkammer 14 ist ein vertieft ausgebildetes Auffangvolumen 23 für Werkstoffpartikel derart ausgebildet ist, dass die im Gasstrom G mitgeführten Werkstoffpartikel sich im Auffangvolumen 23 ansammeln und Werkstoffpartikel aus dem Auffangvolumen 23 aus der Unterdruckkammer 14 über die Saugöffnung 16 der Werkzeugmaschine 1 absaugbar sind.

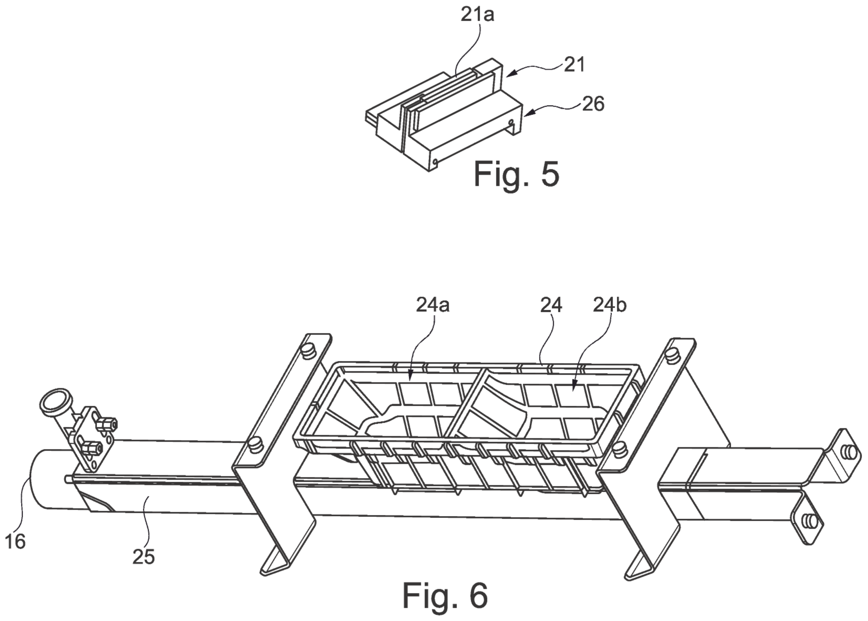

Die Düsenanordnung 17 weist eine erste Düse 21 mit einem Düsenbauteil 26 auf, welche den ersten Verengungsabschnitt 18 bereitstellt. Die Düse 21 weist z. B. einen schlitzartigen Abschnitt 21a auf (s. Fig. 5).

Die Düsenanordnung 17 weist eine zweite Düse 22 auf, welche den zweiten Verengungsabschnitt 19 bereitstellt.

Die Saugöffnung 16 der Werkzeugmaschine 1 ist mit dem Auffangvolumen 23 verbunden. Demgemäß ist die Saugöffnung 16 mit einem Inneren der Unterdruckkammer 14 verbunden.

In der Unterdruckkammer 14 ist das untere Laufrolle 10 drehbar vorhanden, um welches das Sägewerkzeug 6 umfänglich geführt vorgesehen ist, wobei das Auffangvolumen 23 für Werkstoffpartikel unterhalb der unteren Laufrolle 10 ausgebildet ist.

Das Auffangvolumen 23 umfasst zum Beispiel ein Auffangelement 24 zur Bereitstellung des Auffangvolumens 23. Das Auffangelement 24 weist zwei unterteilte Volumenbereiche 24a, 24b des Auffangvolumens 23 auf. Das Innere des Auffangelements 24 bzw. der beiden Volumenbereiche ist über eine Verbindung 25 mit der Saugöffnung 16 verbunden.

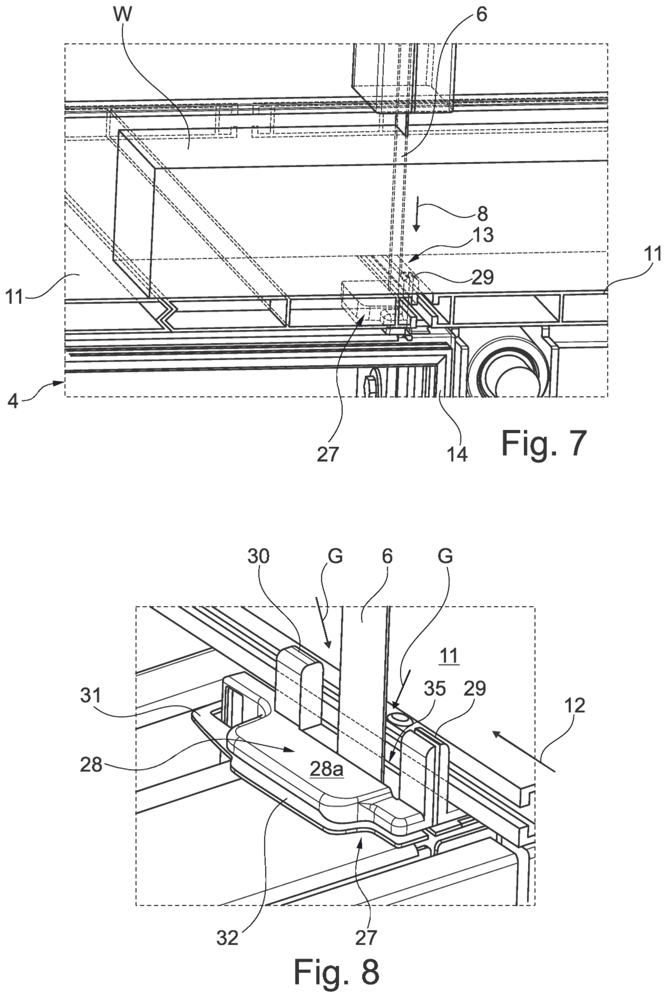

Eine alternative erste Düse 21 mit einem Düsenbauteil 27 zeigen die Fig. 7-10. In den Fig.7 und 8 ist die Auflage 11 mit dem Düsenbauteil 27 für den Arbeitsbetrieb horizontal ausgerichtet.

Das Düsenbauteil 27 ist beweglich gelagert und/oder geführt relativ zum Werkzeugmaschinengehäuse 2 bzw. zum unteren Laufrollenkasten 4.

Das Düsenbauteil 27 weist einen Sockel 28 und zwei zu einer Oberseite 28a des Sockels 28 erhöhte Stegabschnitte 29, 30 auf. Der Sockel 28 reicht beidseitig des Durchlasses 13 in den Bereich unterhalb der Auflage 11. In einem zentralen, z. B. einem mittleren Teil des Düsenbauteils 27 sind die beiden Stegabschnitte 29, 30 und dazwischen eine Düsenöffnung 35 zum Durchlass des Sägewerkzeugs 6 vorhanden. Die Düsenöffnung 35 ist z. B. identisch geformt und fluchtend zu einer Öffnung 33 in einem Befestigungsorgan 31.

Die Oberseite 28a ist flächig an einer Unterseite 11b der Auflage 11 in Anlage. Das Düsenbauteil 27 ist von einem Vorspannelement 32 wie z. B. einem elastisch verformbaren Schaumstoffkörper in Richtung der Auflage 11 vorgespannt.

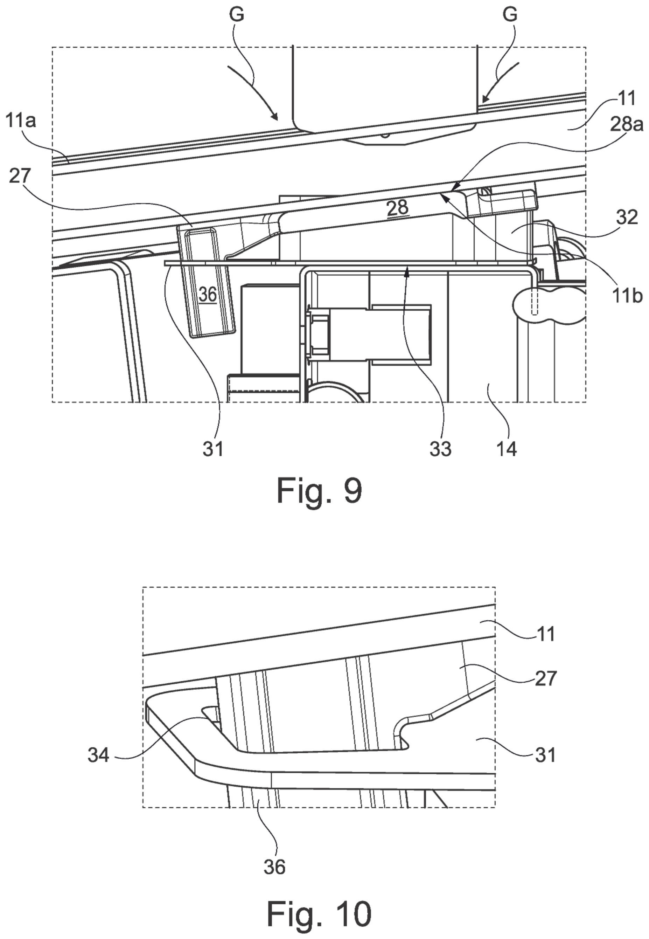

Das Düsenbauteil 27 ist in den Fig. 9 und 10 schräg ausgerichtet bei einer etwas vorne nach oben verschwenkten Auflage 11. Dabei drückt das auf dem Befestigungsorgan 31 vorhandene Vorspannelement 32 das Düsenbauteil 27 gegen die Unterseite 11b der Auflage 11.

Das Düsenbauteil 27 liegt auf dem Vorspannelement 32 auf und ist vertikal versetzbar gemäß einem Maß einer Verformung des elastischen Vorspannelements 32. Das Düsenbauteil 27 ist zudem aus einer im Arbeitsbetrieb horizontalen Ausrichtung auch winklig ausweichbar, z. B. verschwenkbar gelagert vorhanden. Das Düsenbauteil 27 stellt sich gemäß der in Fig. 9, 10 gezeigten Schwenkstellung der Auflage 11 durch das unten andrückende vorgespannte Vorspannelement 32 auf und bleibt dauerhaft in abdichtender Anlage an der Unterseite 11b.

Bei einer linearen Bewegung der Auflage 11 beim Arbeitsbetrieb ist das Düsenbauteil 27 in die lineare Bewegungsrichtung bzw.in Richtung der Linearachse 12 der Auflage 11, also horizontal vor und zurück festgehalten mit bzw. an dem Befestigungsorgan 31.

Zum Beispiel sind beide Stegabschnitte 29, 30 oben bzw. an ihrem freien Ende abgerundet ausgeformt. Zum Beispiel sind beide Stegabschnitte 29, 30 mit dem freien Ende bündig mit der Auflageseite, z. B. stehen nicht über die Oberseite 11a der Auflage über.

Das Befestigungsorgan 31 ist zur Lagerung und/oder Führung des Düsenbauteils 27 ausgebildet ist. Zum Beispiel umfasst das Befestigungsorgan 31 eine metallische Platte mit der Öffnung 33 zum Durchlass des Sägewerkzeugs 6 und mit einer weiteren Öffnung 34, an welcher ein Vorsprung 36 am Düsenbauteil 27 durchgreifend aufgenommen ist.

### Bezugszeichenliste

- 1: Werkzeugmaschine
- 2: Werkzeugmaschinengehäuse
- 3: Laufrollenkasten
- 4: Laufrollenkasten
- 5: Schutzblech
- 6: Sägewerkzeug
- 7: Antriebsmotor
- 8: Umlaufrichtung
- 9: Laufrolle
- 10: Laufrolle
- 11: Auflage
- 11a: Auflageseite
- 11b: Unterseite
- 12: Linearachse
- 13: Durchlass
- 14: Unterdruckkammer
- 15: Auslassöffnung
- 16: Saugöffnung
- 17: Düsenanordnung
- 18: Verengungsabschnitt
- 19: Verengungsabschnitt
- 20: Türe
- 21: Düse
- 21a: Abschnitt
- 22: Düse
- 23: Auffangvolumen
- 24: Auffangelement
- 24a: Volumenbereich
- 24b: Volumenbereich
- 25: Verbindung
- 26: Düsenbauteil
- 27: Düsenbauteil
- 28: Sockel
- 28a: Oberseite
- 29: Stegabschnitt
- 30: Stegabschnitt
- 31: Befestigungsorgan
- 32: Vorspannelement
- 33: Öffnung
- 34: Öffnung
- 35: Düsenöffnung
- 36: Vorsprung
- W: Werkstück
- G: Gasstrom
- A: Achse

## Patentansprüche

1. Werkzeugmaschine (1) mit einem Werkzeugmaschinengehäuse (2) und einem Antriebsmotor (7) für ein Sägewerkzeug (6) der Werkzeugmaschine (1), wobei in einem Arbeitsbetrieb der Werkzeugmaschine (1) zum trennenden Bearbeiten eines Werkstücks (W) das Sägewerkzeug (6) mit dem Antriebsmotor (7) in einer Umlaufrichtung des Sägewerkzeugs (6) umlaufend antreibbar ist, wobei die Werkzeugmaschine (1) eine Auflage (11) mit einer oberen Auflageseite (11a) aufweist, die zum Auflegen des zu bearbeitenden Werkstücks (W) im Arbeitsbetrieb dient, wobei die Auflage (11) einen Durchlass (13) für das Sägewerkzeug (6) aufweist, so dass das Sägewerkzeug (6) durch den Durchlass (13) der Auflage (11) in eine Unterdruckkammer (14) der Werkzeugmaschine (1) durchtritt und aus der Unterdruckkammer (14) über eine Auslassöffnung (15) wieder austritt, wobei die Werkzeugmaschine (1) eine Saugöffnung (16) zum Anschluss einer Unterdruckeinrichtung an der Werkzeugmaschine (1) aufweist, so dass im Arbeitsbetrieb anfallende Werkstoffpartikel über die Saugöffnung (16) aus der Unterdruckkammer (14) abführbar sind, und wobei eine bewegbare Türe (20) vorhanden ist, mit welcher die Unterdruckkammer (14) von außen verschließbar ist und in einer geöffneten Stellung der Türe (20) zeitweise zugänglich ist, **dadurch gekennzeichnet, dass** die Türe (20) eine Dichtung zum Abdichten der Unterdruckkammer (14) nach außen bei verschlossener Türe (20) aufweist, wobei eine Düsenanordnung (17) mit einen ersten Verengungsabschnitt (18) im Nahbereich des Durchlasses (13) der Auflage (11) und/oder mit einem zweiten Verengungsabschnitt (19) im Nahbereich der Auslassöffnung (15) vorgesehen ist, so dass mit einem Verengungsabschnitt (18, 19) bei angeschlossener Unterdruckeinrichtung eine gerichtete Gasströmung (G) in die Unterdruckkammer (14) der Werkzeugmaschine (1) hinein bereitstellbar ist, wobei Gas aus der Umgebung der Werkzeugmaschine (1) durch einen Verengungsabschnitt (18, 19) strömt, so dass Werkstoffpartikel, die durch die trennende Bearbeitung des Werkstücks (W) durch das Sägewerkzeug (6) entstehen, mit der erzeugten Gasströmung (G) in die Unterdruckkammer (14) überführbar oder darin zurückhaltbar sind und wobei im unteren Bereich der Unterdruckkammer (14) ein vertieft ausgebildetes Auffangvolumen (23) für Werkstoffpartikel derart ausgebildet ist, dass die im Gasstrom (G) mitgeführten Werkstoffpartikel sich im Auffangvolumen (23) ansammeln und Werkstoffpartikel aus dem Auffangvolumen (23) aus der Unterdruckkammer (14) über die Saugöffnung (16) der Werkzeugmaschine (1) absaugbar sind.

2. Werkzeugmaschine (1) nach Anspruch 1, **dadurch gekennzeichnet, dass** die Düsenanordnung (17) eine erste Düse (21) umfasst, welche den ersten Verengungsabschnitt (18) bereitstellt.

3. Werkzeugmaschine (1) nach Anspruch 1 oder nach Anspruch 2, **dadurch gekennzeichnet, dass** die Düsenanordnung (17) eine zweite Düse (22) umfasst, welche den zweiten Verengungsabschnitt (19) bereitstellt.

4. Werkzeugmaschine (1) nach einem der vorhergehenden Ansprüche, **dadurch gekennzeichnet, dass** die Werkzeugmaschine (1) als Mineralwerkstoff-Sägemaschine ausgebildet ist.

5. Werkzeugmaschine (1) nach einem der vorhergehenden Ansprüche, **dadurch gekennzeichnet, dass** die Saugöffnung (16) der Werkzeugmaschine mit dem Auffangvolumen (23) verbunden ist.

6. Werkzeugmaschine (1) nach einem der vorhergehenden Ansprüche, **dadurch gekennzeichnet, dass** in der Unterdruckkammer (14) eine untere Laufrolle (10) drehbar vorhanden ist, um welches das Sägewerkzeug (6) umfänglich geführt vorgesehen ist, wobei das Auffangvolumen (23) für Werkstoffpartikel unterhalb der unteren Laufrolle (10) ausgebildet ist.

7. Werkzeugmaschine (1) nach einem der vorhergehenden Ansprüche, **dadurch gekennzeichnet, dass** ein Auffangelement (24) zur Bereitstellung des Auffangvolumens (23) derart ausgebildet ist, dass das Auffangelement (24) zwei unterteilte Volumenbereiche (24a, 24b) des Auffangvolumens (23) aufweist.

8. Werkzeugmaschine (1) nach einem der vorhergehenden Ansprüche, **dadurch gekennzeichnet, dass** Auffangvolumen (23) über eine Verbindung (25) mit der Saugöffnung (16) verbunden ist.

9. Werkzeugmaschine (1) nach einem der vorhergehenden Ansprüche, **dadurch gekennzeichnet, dass** die Werkzeugmaschine (1) für einen Trockensäge-Arbeitsbetrieb ausgebildet ist.

10. Werkzeugmaschine (1) nach Anspruch 2, **dadurch gekennzeichnet, dass** die erste Düse (21) und/oder die zweite Düse (22) ein Düsenbauteil (26, 27) aufweist, wobei das Düsenbauteil (26, 27) beweglich gelagert und/oder geführt ist relativ zum Werkzeugmaschinengehäuse (2).

11. Werkzeugmaschine (1) nach Anspruch 2 oder Anspruch 10, **dadurch gekennzeichnet, dass** das Düsenbauteil (26, 27) von einem Vorspannelement (32) in Richtung der Auflage (11) vorgespannt ist.

12. Werkzeugmaschine (1) nach einem der vorhergehenden Ansprüche 2, 10 oder 11, **dadurch gekennzeichnet, dass** ein Befestigungsorgan (31) vorgesehen ist, wobei das Befestigungsorgan (31) zur Lagerung und/oder Führung des Düsenbauteils (26, 27) ausgebildet ist.
